## Europäisches Patentamt
## European Patent Office
## Office européen des brevets

(11) Numéro de publication: **0 345 160**
**A1**

# DEMANDE DE BREVET EUROPEEN

(21) Numéro de dépôt: 89401504.9

(22) Date de dépôt: 01.06.89

(51) Int. Cl.⁴: **G 21 C 11/08**
**G 21 C 15/12**

(30) Priorité: 02.06.88 FR 8807354

(43) Date de publication de la demande:
06.12.89 Bulletin 89/49

(84) Etats contractants désignés: **DE GB**

(71) Demandeur: **COMMISSARIAT A L'ENERGIE ATOMIQUE**
**31/33, rue de la Fédération**
**F-75015 Paris (FR)**

(72) Inventeur: **Lemercier, Guy**
**67, avenue de la Bourgade**
**F-13610 Le Puy Sainte Reparade (FR)**

(74) Mandataire: **Mongrédien, André et al**
**c/o BREVATOME 25, rue de Ponthieu**
**F-75008 Paris (FR)**

(54) **Réacteur nucléaire à neutrons rapides, refroidi par un métal liquide.**

(57) Dans un réacteur nucléaire à neutrons rapides, refroidi par un métal liquide, les viroles libres émergeantes des structures internes (28) sont équipées, du côté du collecteur chaud (32), de bacs (36) remplis de métal liquide. Le fond de ces bacs est à un niveau inférieur au niveau minimum ($N_{min}$) du métal liquide dans le collecteur chaud, alors qu'au moins un passage (40a) permet la libre communication entre les bacs (36) et le collecteur chaud lorsque le niveau du métal liquide dans ce dernier atteint une valeur maximum ($N_{max}$) correspond au régime nominal du réacteur. Les contraintes thermiques dans les viroles émergeantes des structures internes (28) sont ainsi très atténuées.

FIG. 2

EP 0 345 160 A1

## Description

## Réacteur nucléaire à neutrons rapides, refroidi par un métal liquide.

L'invention concerne un réacteur nucléaire à neutrons rapides, dans lequel l'évacuation de la chaleur dégagée par la réaction de fission dans le coeur du réacteur est assurée par un métal liquide tel que du sodium.

Dans les réacteurs nucléaires à neutrons rapides, de type intégré par exemple, l'ensemble du circuit primaire du réacteur est contenu en totalité dans une cuve principale obturée par une dalle de fermeture. On trouve donc à l'intérieur de cette cuve le coeur du réacteur, des échangeurs de chaleur, et des pompes primaires servant à faire circuler le métal liquide contenu dans la cuve entre le coeur du réacteur et les échangeurs. Le métal liquide remplissant la cuve principale est surmonté d'un ciel de gaz neutre constitué généralement par de l'argon.

Dans un réacteur ainsi conçu, il est indispensable de séparer, à l'intérieur de la cuve principale, le métal liquide relativement chaud sortant du coeur du réacteur et pénétrant dans les échangeurs de chaleur, du métal liquide relativement froid sortant des échangeurs et refoulé vers le coeur par les pompes. A cet effet, des structures internes situées dans la cuve principale délimitent à l'intérieur de cette dernière un collecteur chaud et un collecteur froid contenant respectivement du métal liquide relativement chaud et du métal liquide relativement froid. Ces structures internes comprennent principalement une cuve interne. Lorsque cette cuve interne est traversée par les pompes et par les échangeurs de chaleur, comme c'est généralement le cas, les structures internes comprennent également des baffles entourant chacune des pompes.

Quelle que soit la configuration donnée aux structures internes des réacteurs nucléaires à neutrons rapides, ces structures comportent toujours au moins une virole libre émergeante dont le bord supérieur est situé dans le ciel de gaz neutre. Le plus souvent, plusieurs viroles de ce type sont présentes, ces viroles comprenant alors une virole appartenant à la cuve interne et située à proximité de la cuve principale et des viroles appartenant à chacun des baffles entourant les pompes.

Dans les réacteurs de ce type, les viroles libres émergeantes des structures internes sont soumises à des contraintes thermiques particulièrement sévères, notamment pendant certains régimes transitoires du réacteur.

Pour bien comprendre l'importance de ces contraintes thermiques, il convient de rappeler que le matériau constituant les structures internes est de l'acier inoxydable, mauvais conducteur de la chaleur. Le sodium liquide, qui se caractérise par une bonne conductivité thermique, permet de développer de très grands coefficients d'échange thermique avec les parties immergées des structures internes, alors que l'argon, gaz mauvais conducteur, développe avec les parties émergeantes des viroles de ces mêmes structures des coefficients d'échange thermique très modestes.

A ces différences de comportement thermique du sodium et de l'argon vis-à-vis des structures internes du réacteur s'ajoute, pour le sodium, une variation volumique relativement importante avec la température. Ainsi, lorsque la température du sodium contenu dans le collecteur chaud s'élève de 180°C à 550°C, le volume de sodium contenu dans ce collecteur augmente de 11%. Etant donné que la température de 180°C correspond à l'arrêt du réacteur alors que la température de 550°C correspond au régime de fonctionnement nominal du réacteur, les périodes transitoires au cours desquelles le réacteur passe d'un régime à l'autre provoquent des variations rapides et sensibles du niveau du sodium dans le collecteur chaud. Dans certaines conditions de fonctionnement, la fréquence de ces périodes transitoires peut être importante, notamment lorsque le réacteur est piloté de façon à produire de l'électricité en réponse à la demande du réseau.

Lorsque les régimes transitoires se caractérisent par une diminution du niveau du sodium dans le collecteur chaud, les parties des viroles progressivement dénoyées se refroidissent lentement sans poser de problème particulier, étant donné que les viroles conduisent mieux la chaleur que l'argon environnant.

En revanche, lorsque le niveau du sodium dans le collecteur chaud augmente rapidement, des gradients thermiques axiaux se développent dans les viroles émergeantes, à partir de la surface libre de sodium liquide dans le collecteur chaud. Par "gradients thermiques axiaux", on désigne ici des gradients thermiques orientés parallèlement à l'axe de la cuve principale et de la cuve interne, c'est-à-dire selon une direction verticale. Ces gradients thermiques sont d'autant plus importants que les écarts de température entre le sodium et l'argon sont grands et que les variations de niveaux du sodium dans le collecteur chaud sont rapides et d'amplitude importante.

Si aucune précaution particulière n'est prise, ces gradients thermiques conduisent sur ces viroles à des phénomènes de flambage par flexion thermique, déformation progressive, fatigue, fluage et interaction de fatigue fluage dont les dommages sont inacceptables. Afin que les gradients thermiques restent dans des limites acceptables, le démarrage d'un tel réacteur du régime d'arrêt dans lequel le sodium contenu dans le collecteur chaud est à 180°C au régime nominal dans lequel ce même sodium est à 550°C est habituellement étalé sur plusieurs dizaines d'heures.

L'invention a précisément pour objet un réacteur nucléaire à neutrons rapides, refroidi par un métal liquide, dans lequel les viroles libres émergeantes des structures internes sont protégées de telle sorte que les gradients thermiques qui se forment dans les viroles lors d'une augmentation de niveau du métal liquide dans le collecteur chaud restent dans des limites acceptables, quelles que soient la rapidité et l'amplitude des variations de niveau et sans que les dimensions et le poids de ces viroles soient augmentés de façon pénalisante.

Conformément à l'invention, ce résultat est obtenu au moyen d'un réacteur nucléaire à neutrons rapides, dans lequel le coeur du réacteur est placé à l'intérieur d'une cuve principale remplie de métal liquide surmonté d'un ciel de gaz neutre, des structures internes à la cuve principale délimitant à l'intérieur de cette dernière un collecteur chaud et un collecteur froid contenant respectivement du métal liquide relativement chaud et du métal liquide relativement froid, ces structures internes comportant au moins une virole libre émergeante dont un bord supérieur est situé dans le ciel de gaz neutre, caractérisé par le fait que chaque virole libre émergeante comporte, du côté du collecteur chaud un bac rempli de métal liquide, ayant un fond situé en dessous d'un niveau minimum du métal liquide dans le collecteur chaud, au moins un passage situé en dessous d'un niveau maximum dudit métal liquide, ledit passage faisant communiquer le bac avec le collecteur chaud lorsque le réacteur est en régime nominal.

Grâce à cette configuration, lors des changements de régime du réacteur conduisant à des variations de niveau du métal liquide dans le collecteur chaud, le bac qui est accolé à chacune des viroles libres émergeantes du côté de ce collecteur reste plein de métal liquide. Par convection naturelle, ce métal liquide maintient pratiquement à la température du métal liquide contenu dans le collecteur chaud la plus grande hauteur de la virole émergeante. De plus, l'adjonction d'un tel bac n'est pas pénalisante du point de vue des dimensions et du poids, car une lame de métal liquide de faible épaisseur est suffisante pour permettre la convection naturelle.

Dans un premier mode de réalisation de l'invention, ledit passage est formé au-dessus d'un bord supérieur d'une paroi délimitant le bac du côté du collecteur chaud.

Dans un deuxième mode de réalisation de l'invention, plusieurs passages sont formés dans une paroi délimitant le bac du côté du collecteur chaud, cette paroi comportant un bord supérieur situé au-dessus du niveau du métal liquide contenu dans le collecteur chaud, lorsque le réacteur est en régime nominal.

En plus, des avantages précédemment mentionnés, cette solution permet d'amortir, sur les viroles des structures internes, les effets des vagues provoquées en régime nominal par des variations rapides et de faible amplitude de la surface libre du métal liquide dans le collecteur chaud, génératrices de fatigue thermique. La paroi qui délimite le bac du côté du collecteur chaud et qui subit alors les effets de ces vagues étant sensiblement moins épaisse que la virole dont elle assure la protection, ces effets sont sensiblement atténués. Par ailleurs, cette solution conduit à réduire encore les gradients de température dans la virole libre émergeante, grâce à l'interposition d'un écran thermique à la déperdition de chaleur de la virole dans sa partie émergeante.

Lorsque le bac assurant la protection thermique de chacune des viroles des structures internes est réalisé d'un seul tenant, une fuite éventuelle lui fait perdre une partie de son efficacité. Toutefois, la tablette soudée sur la virole et constituant le fond du bac reste noyée en permanence dans le métal liquide du collecteur chaud, de sorte que les gradients thermiques axiaux dans les viroles restent atténués.

Cependant, afin de réduire la conséquence d'une fuite d'un bac de protection thermique associé à l'une des viroles, ce bac est de préférence formé de plusieurs bacs élémentaires juxtaposés, répartis le long de la virole et ne communiquant pas entre eux.

Ainsi, les bacs élémentaires peuvent notamment comprendre des tubes verticaux de section approximativement carrée, fermés à leur extrémité inférieure, qui est fixée sur une tablette horizontale soudée sur la virole, une ceinture maintenant les extrémités supérieures des tubes plaqués contre la virole.

Différents modes de réalisation de l'invention vont à présent être décrits, à titre d'exemple non limitatif, en se référant aux dessins annexés dans lesquels :

    - la figure 1 est une vue en coupe verticale représentant une partie d'un réacteur nucléaire à neutrons rapides de type intégré, refroidi par un métal liquide, réalisé conformément à l'invention ;

    - la figure 2 est une vue en perspective, partiellement en coupe, illustrant à plus grande échelle la virole libre émergeante de la cuve interne du réacteur de la figure 1, munie d'un bac de protection thermique du côté du collecteur chaud, conformément à un premier mode de réalisation de l'invention ;

    - la figure 3 est une vue comparable à la figure 2 illustrant un deuxième mode de réalisation de l'invention ; et

    - la figure 4 est une vue comparable à la figure 3 illustrant une variante du deuxième mode de réalisation de l'invention.

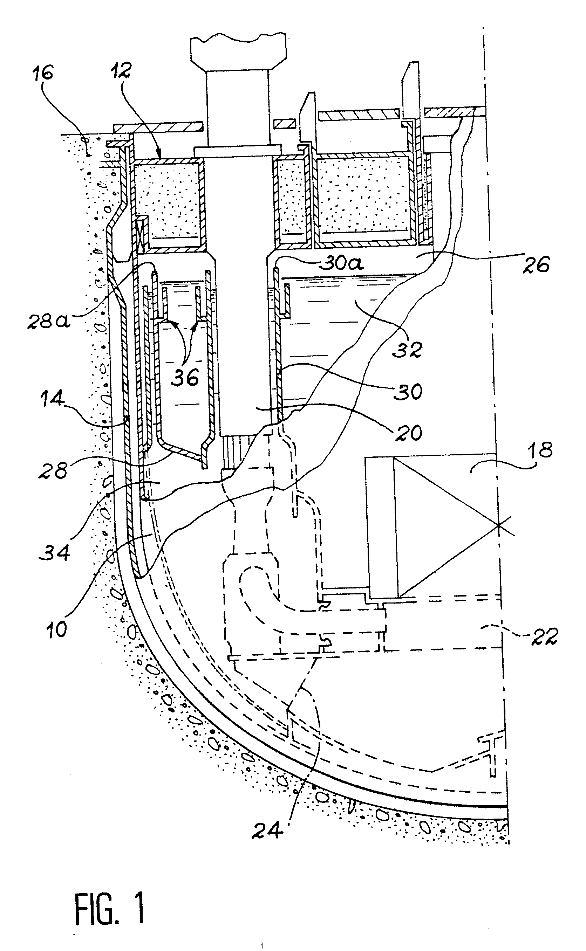

Le réacteur nucléaire à neutrons rapides de type intégré et refroidi par un métal liquide illustré sur la figure 1 présente une structure générale bien connue de l'homme du métier. Seules les caractéristiques de cette structure nécessaires à la bonne compréhension de l'invention seront donc décrites.

Ce réacteur nucléaire comprend notamment une cuve principale 10, d'axe vertical, obturée à son extrémité supérieure par une dalle de fermeture 12. La cuve 10 est doublée extérieurement par une cuve de sécurité 14 et l'ensemble est placé dans un puits de cuve formé dans un caisson en béton 16.

De façon habituelle dans les réacteurs de type intégré, la cuve principale 10 du réacteur contient à la fois le coeur 18, des échangeurs de chaleur (non représentés) et des pompes primaires 20. Le coeur 18 du réacteur repose sur le fond de la cuve principale 10 par l'intermédiaire d'un sommier 22 d'alimentation en métal liquide et d'une structure de supportage 24 généralement appelée platelage. Au contraire, les échangeurs (non représentés) et les pompes 20 sont suspendus à la dalle de fermeture 12.

La cuve principale 10 est remplie de métal liquide, généralement constitué par du sodium, dans lequel sont noyés le coeur 18 du réacteur ainsi que les échangeurs et les pompes. Ce métal liquide est surmonté d'un ciel de gaz neutre 26 généralement constitué par de l'argon.

A l'intérieur de la cuve principale 10 se trouvent en outre des structures internes, réalisées en acier inoxydable, qui se composent principalement d'une cuve interne 28 et de baffles 30 disposés concentriquement autour de chacune des pompes 20. Ces structures internes servent à séparer, à l'intérieur de la cuve principale 10, un collecteur chaud 32 d'un collecteur froid 34.

La cuve interne 28 est soudée à sa base au bord périphérique du sommier 22 et elle s'évase progressivement vers le haut pour se terminer sous la forme d'une virole cylindrique disposée concentriquement à l'intérieur de la cuve principale 10, à proximité de cette dernière, de telle sorte que son bord supérieur 28a soit situé dans le ciel de gaz neutre 26. Le collecteur chaud 32 est formé à l'intérieur de la cuve interne 28 ainsi constituée, alors que le collecteur froid 34 se trouve entre la cuve interne 28 et la cuve principale 10.

Compte tenu de cette forme particulière de la cuve interne 28, les échangeurs de chaleur et les pompes 20 traversent cette cuve. Plus précisément, la cuve 28 est raccordée à chacun des échangeurs de chaleur par un dispositif d'étanchéité tel qu'un dispositif à cloche d'argon, de telle sorte que des fenêtres d'entrée des échangeurs débouchent dans le collecteur chaud 32 et que des fenêtres de sortie des échangeurs débouchent dans le collecteur froid 34. Par ailleurs et comme le montre la figure 1, chacune des pompes 20 est placée à l'intérieur d'un baffle cylindrique 30 fixé sur la cuve interne 28 et s'étendant vers le haut à partir de cette dernière sous la forme d'une virole cylindrique dont le bord supérieur 30a est également situé dans le ciel de gaz neutre 26.

La température du métal liquide contenu dans le collecteur chaud 32, sortant du coeur 18 du réacteur et non encore refroidi dans les échangeurs de chaleur, subit des variations importantes selon le régime du réacteur. Ainsi, lorsque le réacteur est à l'arrêt, cette température est d'environ 180°C, alors qu'elle atteint environ 550°C en régime nominal, c'est-à-dire dans les conditions normales de fonctionnement du réacteur.

Comme on l'a mentionné précédemment, compte tenu des caractéristiques particulières du sodium qui constitue généralement le métal liquide utilisé dans de tels réacteurs, ces variations importantes de températures se traduisent par des variations volumiques du sodium et, par conséquent, par des variations appréciables du niveau du sodium dans le collecteur chaud 32. En raison de la mauvaise conductivité thermique de l'acier inoxydable constituant les structures internes du réacteur, des augmentations importantes et rapides du niveau du métal liquide dans le collecteur chaud peuvent conduire à des dommages inacceptables des viroles libres émergeantes de la cuve interne 28 et des baffles 30.

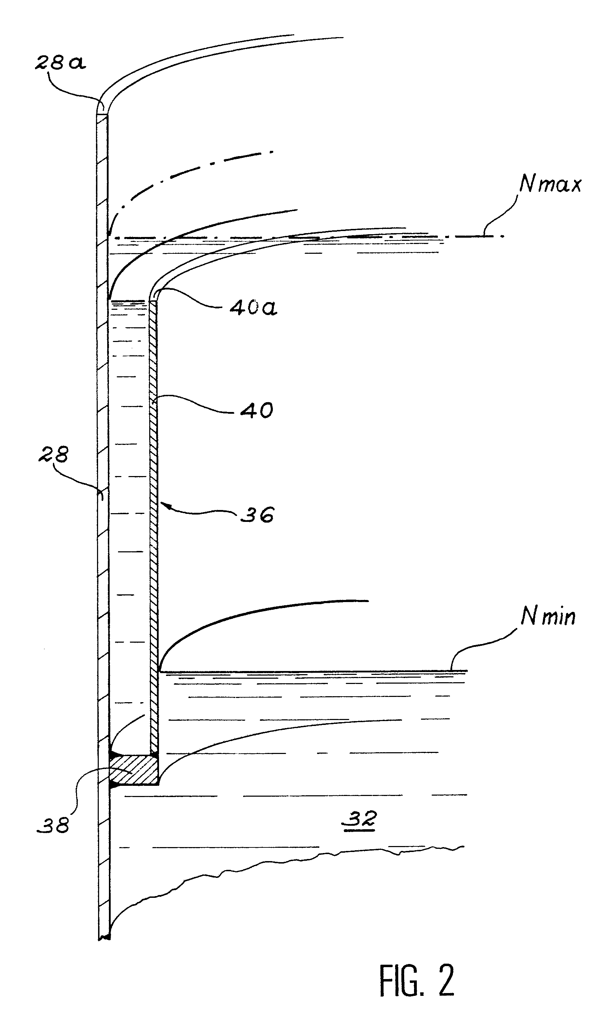

Conformément à l'invention et comme l'illustre plus en détail la figure 2, ces dommages peuvent être évités en équipant chacune de ces viroles, du côté du collecteur chaud 32, d'un bac de protection thermique 36 rempli de métal liquide.

Dans le mode de réalisation représenté sur la figure 2, ce bac de protection thermique 36 est délimité à sa base par une tablette horizontale 38 soudée sur la virole libre émergeante de la cuve interne 28, du côté du collecteur chaud 32, en dessous du niveau minimum $N_{min}$ du métal liquide contenu dans le collecteur chaud, ce niveau minimum correspondant au niveau du métal liquide dans le collecteur chaud lorsque le réacteur est à l'arrêt, c'est-à-dire lorsque la température est d'environ 180°C, dans le cas du sodium. Ainsi, la tablette 38 qui constitue le fond du bac 36 peut être située à environ 100 mm au-dessous du niveau minimum $N_{min}$ du métal liquide dans le collecteur chaud 32.

Le bac 36 est délimité du côté du collecteur chaud 32 par une paroi parallèle à la virole de la cuve interne 28, constituée par un baffle 40, de faible épaisseur (par exemple, environ 8 mm). Le baffle 40 définit avec la virole de la cuve interne 28 un espace annulaire dont l'épaisseur uniforme peut être par exemple d'environ 30 mm. Des écarteurs (non représentés) constitués par des règles parallélépipédiques, sont montés sur toute la hauteur du bac et régulièrement répartis sur toute la périphérie de la virole de la cuve interne 28, de façon à maintenir constant l'espace formé entre cette virole et le baffle 40.

Dans le mode de réalisation représenté sur la figure 2, le bord supérieur 40a du baffle 40 est situé à un niveau inférieur au niveau maximum $N_{max}$ du métal liquide dans le collecteur chaud 32, ce niveau maximum correspondant au régime de fonctionnement nominal du réacteur, c'est-à-dire à une température d'environ 550°C lorsque le métal liquide est du sodium. De façon plus précise, le bord supérieur 40a du baffle 40 est situé au maximum à 100 mm au-dessous du niveau maximum $N_{max}$ du métal liquide dans le collecteur chaud 32.

Grâce à l'agencement qui vient d'être décrit en se référant à la figure 2, chacun des bacs 36 est en permanence rempli de métal liquide dont la température est voisine de celle du métal liquide contenu dans le collecteur chaud 32. Par conséquent, lorsque le niveau du métal liquide dans ce collecteur varie lors des changements de régime du réacteur, la virole libre émergeante 28 équipée de ce bac est maintenue sur la plus grande partie de sa hauteur à la température du métal liquide contenu dans ce bac, qui reste toujours voisine de la température du métal liquide contenu dans le collecteur chaud 32. Les gradients thermiques axiaux se trouvent ainsi très sensiblement réduits, même dans le cas de variations rapides et importantes du niveau du métal liquide dans le collecteur chaud 32.

Le remplissage des bacs 36 s'effectue en pratique lors de la première montée en température du réacteur, qui est toujours très lente. Durant cette période, les bacs se remplissent d'abord par les condensats d'aérosols de sodium, puis par débordement du métal liquide du collecteur chaud 32 au-dessus du bord supérieur 40a du baffle 40.

En outre, le métal liquide contenu dans les bacs 36 est automatiquement purifié en même temps que le reste du métal liquide contenu dans la cuve principale 10, dès qu'il y a communication entre le métal liquide des bacs et le métal liquide du collecteur chaud 32 par le passage formé au-dessus du bord 40a.

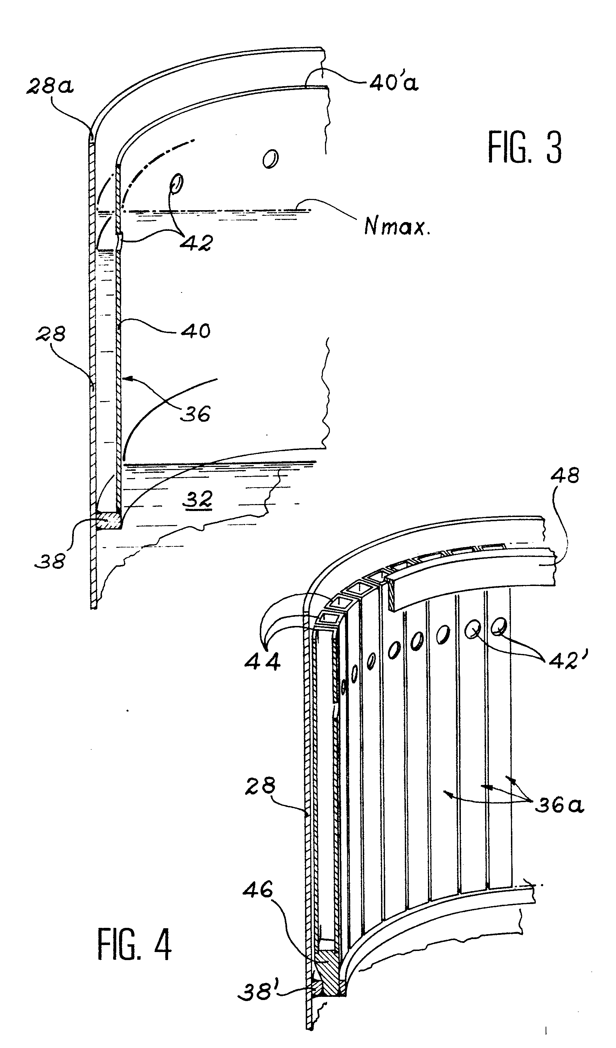

La figure 3 représente un deuxième mode de réalisation de l'invention. Dans ce mode de réalisation, le bac 36 rempli de métal liquide est également délimité par une tablette inférieure horizontale 38 soudée sur la virole de la cuve interne 28 du côté du collecteur chaud 32, et par un baffle 40 soudé sur le bord périphérique intérieur de la tablette 38 et doublant intérieurement la partie supérieure de la virole 28, en ménageant un espace annulaire rempli de métal liquide.

Ce mode de réalisation se distingue essentiellement du précédent par le fait que le bord supérieur 40'a du baffle 40 est situé à un niveau supérieur au niveau maximum $N_{max}$ du métal liquide dans le collecteur chaud, approximativement à la même hauteur que le bord supérieur 28a de la virole de la cuve interne 28. Pour permettre la communication entre le bac 36 et le collecteur chaud 32 en régime nominal, c'est-à-dire lorsque le niveau du métal liquide atteint sa valeur maximum $N_{max}$, des passages 42 circonférentiellement répartis sont formés dans le baffle 40 à un niveau légèrement inférieur à ce niveau $N_{max}$. Le bord inférieur de ces passages 42 est situé plus précisément au maximum à 100 mm au-dessous du niveau maximum $N_{max}$ du métal liquide dans le collecteur chaud 32.

Dans ce deuxième mode de réalisation, les passages 42 remplissent la même fonction que le passage formé au-dessus du bord supérieur du baffle 40 dans le premier mode de réalisation. En d'autres termes, les passages 42 permettent la libre circulation du métal liquide entre le bac 36 et le collecteur chaud 32 lorsque le réacteur est au régime nominal. De plus, ils sont placés à un niveau suffisant pour assurer la présence de métal liquide à l'intérieur du bac 36 lorsque le niveau du métal liquide dans le collecteur chaud 32 est plus bas.

En outre, dans ce mode de réalisation, le prolongement vers le haut du baffle 40 permet de réduire les effets sur la virole de la cuve interne 28 des vagues qui se produisent habituellement à la surface du métal liquide contenu dans le collecteur chaud 32 en régime nominal. Cette caractéristique permet aussi de réduire encore les gradients de température dans les viroles libres émergeantes 28 ou 30.

Dans les deux modes de réalisation qui viennent d'être décrits, si une fuite se produit dans le fond du bac 36, le métal liquide contenu dans ce bac subit toutes les variations de niveaux du métal liquide dans le collecteur chaud 32. Par conséquent, la fonction assurée normalement par le métal liquide contenu dans le bac n'est plus remplie. La tablette 38, qui reste en permanence immergée dans le métal liquide quel que soit le régime de fonctionnement du réacteur, a alors pour effet d'atténuer les gradients thermiques axiaux dans la virole de la cuve interne.

Dans la variante de réalisation représentée sur la figure 4, les conséquences d'une telle fuite sont réduites grâce à la division du bac en un grand nombre de bacs élémentaires juxtaposés 36a, qui sont répartis sur toute la périphérie de la virole de la cuve interne 28 et ne communiquent pas entre eux.

De façon plus précise, chacun des bacs élémentaires 36a comprend un tube vertical, de section approximativement carrée, réalisé en acier inoxydable. Chacun des tubes 44 est fermé à son extrémité inférieure par un bouchon soudé 46. La partie inférieure cylindrique de chacun des bouchons 46, excentrée par rapport à l'axe du tube 44 correspondant, est emmanchée et soudée dans une ouverture circulaire formée dans une tablette inférieur horizontale 38' soudée sur la virole de la cuve interne 28. En outre, une ceinture circulaire 48 est soudée sur la face tournée vers le collecteur chaud de chacun des tubes 44, à l'extrémité supérieure de ces derniers, de façon à maintenir cette extrémité des tubes plaquée contre la virole de la cuve interne 28.

Sur la figure 4, on a représenté une variante du mode de réalisation de la figure 3. Les extrémités supérieures des tubes 44 constituant les bacs élémentaires 36a se trouvent donc à un niveau supérieur au niveau maximum du métal liquide dans le collecteur chaud du réacteur. En outre, la paroi de chacun des tubes tournée vers le collecteur chaud est traversée par un passage 42' situé à un niveau légèrement inférieur à ce niveau maximum. Cet agencement permet de remplir les mêmes fonctions que dans le mode de réalisation de la figure 3 et garantit la réalisation de ces fonctions même dans le cas où un ou plusieurs des bacs élémentaires 36a comporteraient une fuite.

Bien entendu, la variante de réalisation de la figure 4 peut également s'appliquer au mode de réalisation de la figure 2. Dans ce cas, l'extrémité supérieure de chacun des tubes se trouve située à un niveau légèrement inférieur au niveau maximum du métal liquide dans le collecteur chaud 32.

Bien que les descriptions qui viennent d'être faites en se référant aux figures 2 à 4 concernent la protection de la virole libre émergeante de la cuve interne 28 sur la figure 1, on comprend que des structures comparables sont prévues pour chacune des viroles émergeantes des structures internes du réacteur, et notamment pour les viroles des baffles 30 entourant les pompes 20 sur la figure 1.

Il est à noter que l'invention s'applique à toute structure émergeante d'un fluide bon conducteur de la chaleur dans un fluide mauvais conducteur de la chaleur. De ce point de vue, l'invention n'est pas limitée à un réacteur de type intégré et s'applique également à un réacteur de type "à boucles" dans lequel les échangeurs et, éventuellement, les pompes sont placés hors de la cuve principale.

**Revendications**

1. Réacteur nucléaire à neutrons rapides dans lequel le coeur (18) du réacteur, est placé à l'intérieur d'une cuve principale (10) remplie de métal liquide surmonté d'un ciel de gaz neutre (26), des structures internes (28,30) à la cuve principale délimitant à l'intérieur de cette dernière un collecteur chaud (32) et un collecteur froid (34) contenant respectivement du métal liquide relativement chaud et du métal liquide relativement froid, ces structures internes comportant au moins une virole libre émergeante dont un bord supérieur (28a,30a) est situé dans le ciel de gaz neutre, caractérisé par le fait que chaque virole libre émergeante comporte, du côté du collecteur chaud (32), un bac (36) rempli de métal liquide, ayant un fond (38) situé en dessous d'un niveau minimum ($N_{min}$) du métal liquide dans le collecteur chaud, au moins un passage (40a,42) situé en dessous d'un niveau maximum dudit métal liquide, ledit passage faisant communiquer le bac avec le collecteur chaud lorsque le réacteur est en régime nominal.

2. Réacteur selon la revendication 1, caractérisé par le fait que ledit passage est formé au-dessus d'un bord supérieur (40a) d'une paroi (40) délimitant le bac (36) du côté du collecteur chaud (32).

3. Réacteur selon la revendication 1, caractérisé par le fait que plusieurs passages (42) sont formés dans une paroi (40) délimitant le bac (36) du côté du collecteur chaud (32), cette paroi comportant un bord supérieur (40'a) situé au-dessus du niveau ($N_{max}$) du métal liquide contenu dans le collecteur chaud, lorsque le réacteur est en régime nominal.

4. Réacteur selon l'une quelconque des revendications précédentes, caractérisé par le fait que le bac est formé de plusieurs bacs élémentaires (36a) juxtaposés, répartis le long de la virole et ne communi quant pas entre eux.

5. Réacteur selon la revendication 4, caractérisé par le fait que les bacs élémentaires (36a) comprennent des tubes verticaux (44) de section approximativement carrée, fermés à leur extrémité inférieure, qui est fixée sur une tablette horizontale (38') soudée sur la virole, une ceinture (48) maintenant les extrémités supérieures des tubes plaquées contre la virole.

6. Réacteur selon l'une quelconque des revendications précédentes, caractérisé par le fait que les structures internes comportent une cuve interne (28) comportant une virole libre émergeante voisine de la cuve principale (10) et des baffles (30) entourant des pompes (20) également placées dans la cuve principale, ces baffles (30) comportant également une virole libre émergeante, un bac (36) rempli de métal liquide étant monté sur chacune de ces viroles.

FIG. 1

FIG. 2

FIG. 3

FIG. 4

Office européen
des brevets

## RAPPORT DE RECHERCHE EUROPEENNE

Numero de la demande

EP  89 40 1504

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 265 311  (NOVATOME)<br>* Colonne 3, ligne 61 - colonne 4, ligne 41; colonne 5, lignes 22-29; figures 1,2 *<br>--- | 1,2 | G 21 C  11/08<br>G 21 C  15/12 |
| A | EP-A-0 020 264  (CEA)<br>* Page 1, lignes 11-17; figure 1 *<br>--- | 1 | |
| A | EP-A-0 067 103  (CEA)<br>* Résumé; figures 1,3 *<br>--- | 1,6 | |
| A | FR-A-2 425 129  (CEA)<br>* Page 4, lignes 1-11; figure 1 *<br>----- | 1,4 | |

### DOMAINES TECHNIQUES RECHERCHES (Int. Cl.4)

G 21 C  11/00
G 21 C  15/00

Le présent rapport a été établi pour toutes les revendications

| Lieu de la recherche | Date d'achèvement de la recherche | Examinateur |
|---|---|---|
| LA HAYE | 11-08-1989 | JANDL F. |